# EUROPEAN PATENT APPLICATION

(11) **EP 4 814 232 A1**
(43) Date of publication of application: **30.09.2026**
(21) Application number: 25166146.8
(22) Date of filing: 25.03.2025
(51) Int. Cl.: E04G 21/04, B33Y 10/00, B33Y 30/00, B33Y 80/00, E04G 21/02, B33Y 40/10

(54) **METHOD OF FEEDING BATCHES OF CONCRETE AND AGITATED CONCRETE HOPPER FOR FEEDING BATCHES OF CONCRETE**

(71) Applicant: Umdasch Group Ventures GmbH, 3300 Amstetten (AT)
(72) Inventor: BLAGOJEVI , Andrija, 5928PM Venlo (NL); GHOURCHIAN, Sadegh, 6041CC Roermond (NL); PENEDER, Johann, 3325 Ferschnitz (AT)
(74) Representative: SONN Patentanwälte GmbH & Co KG

(57) **Abstract**

Method of feeding batches of concrete, preferably to a concrete pump (26), with an agitated concrete hopper (1) comprising a container (2) with a hopper inlet (5) and a hopper outlet (7) and an agitator (9) arranged at least partially in the container (2), with the steps:
- loading (12) a first batch (3) of concrete through the hopper inlet (5) into the container (2);
- loading (13) a second batch (4) of concrete through the hopper inlet (5) into the container (2), such that the second batch (3) is positioned above the first batch (3)in the container (2);
- agitating (14) the first batch (3) and the second batch (4)by means of the agitator (9), wherein the first batch (3)and the second batch (4) remain substantially separate from one another;
- discharging (15) the first batch (3) through the hopper outlet (7); and
- after discharging (15) the first batch (3), discharging (16) the second batch (4) through the hopper outlet (7).

## Description

The disclosure concerns a method of feeding batches of concrete, a method for concrete 3D-printing, an agitated concrete hopper for feeding batches of concrete, a system for providing concrete, a concrete batching plant for providing concrete and a concrete 3D-printing system.

The present invention relates to construction processes utilizing concrete, in particular to methods and systems for three-dimensional (3D) printing using concrete as construction material.

The adoption of concrete in 3D printing presents numerous advantages over conventional methods using, for example, mortar. Concrete is significantly more cost-effective due to its widespread availability and low material costs. Additionally, the use of concrete allows for the production of larger and more robust structures, as its intrinsic properties provide superior compressive strength and durability. These attributes make concrete an ideal candidate for large-scale applications such as the construction of walls, bridges, and other infrastructure projects, where traditional additive manufacturing materials may prove economically prohibitive or structurally inadequate.

For example, a printing system for concrete is known from EP 4 347 220 A1.

In the context of concrete and mortar 3D printing, two primary process paradigms have emerged: single-component (1K) and two-component (2K) systems. In 2K processes, additives that facilitate the hardening of the mortar (or concrete) are introduced at the printing head shortly before the extrusion of the mortar or concrete. This localized addition allows for precise control over the setting and hardening process, minimizing waste and enabling rapid printing. However, the interlayer bonding (i.e., the vertical bonding of adjacent layers of concrete) achieved in 2K systems is often insufficient, potentially compromising the structural integrity of the printed components. In addition, the printing head needs to be equipped with means for adding the additives, which adds complexity as well as weight to the printing head.

Conversely, 1K processes incorporate hardening additives during the initial production of the concrete mixture. While this approach necessitates meticulous adjustment of the open time - the window during which the concrete remains workable-it yields substantial benefits in terms of interlayer bonding and overall mechanical strength. The superior layer adhesion inherent to 1K processes enhances the structural performance of printed components, making this approach particularly advantageous for demanding applications where long-term durability is a critical factor.

Despite its significant advantages, the implementation of 1K concrete printing poses significant technical challenges. For example, in 2K processes, the chemical and mechanical properties of the concrete do not change rapidly over time before the additives are added. It is therefore possible to pre-mix the concrete (without the additives for hardening), for example in a stationary, central batching plant, transport the concrete to the 3D printer, which adds the additives in the printing process. The open time of the concrete in 2K processes starts when the additives are added, i.e. right at the nozzle. In 1K processes, the open-time starts with the initial production of the concrete. The open-time needs to be precisely aligned with the overall setup and the printing process. Hence, control of the concrete and overall timing is crucial, especially in 1K processes.

Another issue is that the production of concrete is usually done in batch processes. Typically, a mixer is used to mix the raw materials (at least water, aggregates, and a binder, such as cement) in order to receive a batch of concrete. Managing a continuous flow of concrete during the printing process adds another layer of complexity, as interruptions can lead to weak interlayer bonding or structural defects. In order to facilitate a continuous printing process, at batches of concrete need to be pre-produced before they are actually printed. Additionally, in order to avoid hardening of the concrete during its storage, the concrete should be kept in motion during storage.

For feeding concrete, for example to a printing nozzle, usually a hopper and a pump are used. The term hopper refers to a receptacle used to hold and manage the flow of concrete. It is typically funnel-shaped, with a wider opening at the top for loading material and a narrower outlet at the bottom to control the discharge.

For example, an eccentric screw pump device for concrete is known from WO 2024 170 426 A1.

A further concrete pump is, for example, known from MAI International GmbH. See in particular the product MAI^{®}2PUMP TAURUS, which comprises a hopper and a pump for premixed materials of up to 8 mm grain size (cf. https://mai.at/en/product-range/mixing-pumping/mai-r-2pump-taurus; accessed on 10. January 2025).

WO 2024 078919 A1 shows a system for extruding cementitious material with a hopper and a pump. The hopper comprises an agitator for maintaining the cementitious material in the hopper at a quasi-constant rheological state before being led to the print head. The print head further comprises a mixing enclosure arranged upstream of an extrusion nozzle. This mixing enclosure is equipped with a dynamic mixer adapted to be able to mix the cementitious material and adjuvants. Therefore, WO 2024 078919 A1 concerns a 2K system.

Existing systems fail to provide the level of control necessary to maintain consistent open time while ensuring continuous flow of concrete to the printing nozzle. This limitation hinders the practical implementation of concrete 3D printing and in particular 1K processes in real-world applications.

It is therefore an object of the present invention to provide a method of feeding batches of concrete, a method for concrete 3D-printing, an agitated concrete hopper for feeding batches of concrete, a system for providing concrete, a concrete batching plant for providing concrete and a concrete 3D-printing system that alleviate or eliminate the above-mentioned drawbacks. In particular, it is an object of the invention to provide a method of feeding batches of concrete, a method for concrete 3D-printing, an agitated concrete hopper for feeding batches of concrete, a system for providing concrete, a concrete batching plant for providing concrete and a concrete 3D-printing system, that enable a continuous (1K) 3D concrete printing process with enhanced reliability.

This object is solved by a method of feeding batches of concrete according to claim 1, a method for concrete 3D-printing according to claim 8, an agitated concrete hopper for feeding batches of concrete according to claim 9, a system for providing concrete according to claim 10, a concrete batching plant for providing concrete according to claim 11 and a concrete 3D-printing system according to claim 14.

The method of feeding batches of concrete, preferably to a concrete pump, with an agitated concrete hopper comprising a container with a hopper inlet and a hopper outlet and an agitator arranged at least partially in the container, comprises the steps:
- loading a first batch of concrete through the hopper inlet into the container;
- loading a second batch of concrete through the hopper inlet into the container, such that the second batch is positioned above the first batch in the container;
- agitating the first batch and the second batch by means of the agitator, wherein the first batch and the second batch remain substantially separate from one another;
- discharging the first batch through the hopper outlet; and
- after discharging the first batch, discharging the second batch through the hopper outlet.

The container is a receptacle for storing concrete. The container may be funnel-shaped and/or tapered towards a bottom end of the container. The container may comprise a height of 1 m (meter) to 2 m, for example. The hopper inlet may comprise a circular cross-section. Alternatively, the hopper inlet may comprise a rectangular cross-section. The hopper inlet may comprise a diameter of 50 cm (centimeter) to 200cm, for example. The hopper outlet may comprise a diameter of 10 cm to 40 cm, for example. A cross-section of the hopper inlet may comprise an area of 0,2 m² to 1,2 m², for example. The container may comprise an inner volume for storing concrete with a capacity of 60 1 (liter) to 400, for example. Preferably, the inner volume has a capacity of 90 1 to 300 l.

The hopper inlet may be arranged at a top end of the container. The term "top" refers to an orientation of the hopper in intended or normal use.

The hopper outlet may be opposite of the hopper inlet on a bottom end of the container. Concrete in the container may flow towards the hopper outlet due to the gravity The agitated concrete hopper comprises an agitator arranged at least partially in the container. The agitator may comprise a shaft. The shaft may be configured for connecting to a motor. The motor may be an electric motor, for example. The agitator may comprise at least one blade for agitating concrete in the container when the agitator is being moved, in particular rotated. At least the blades may be arranged in the container. The agitator may be rotated at a rotational speed of at least five revolution per minute, in particular at least eight revolutions per minute, preferably between eight and thirty revolutions per minute. The agitated concrete hopper may comprise a frequency control unit for controlling the motor and in particular the rotational speed.

The term "batch of concrete" refers to a volume or a quantity of concrete that was or is produced in a single batch process, for example by means of a mixer. A batch of concrete may be prepared to meet requirements of a particular construction project, including strength, durability, and workability. In this context, the open time is a critical parameter. The open time of concrete, also referred to as its workable time, may be defined as the duration during which concrete remains workable and can be effectively placed (for example, extruded in a 3D printing process) and optionally compacted, and finished. The open time depends on chemical processes in the concrete, as is known in the art. The first batch of concrete may be produced at a first time and the second batch of concrete may be produced at a second time, wherein the first time is prior to the second time. In other words, the second batch may be produced after the first batch. The open time of the first batch may expire before the open time of the second batch expires. The open time of concrete that is used for casting processes may be on the order of hours. However, especially in 3D-printing processes, the open time of the concrete needs to be precisely aligned with the printing process. In particular, consecutive layers of concrete that are extruded need to bond together in order to have sufficient interlayer bond strength. However, the layers also need to harden sufficiently fast to support further layers that are placed on top. If bottom layers do not harden sufficiently fast, a printed structure may collapse. Therefore, precise control of the open time is crucial, especially for 3D-printing.

In general, hoppers are used for feeding concrete, for example to a concrete pump. Depending on the application and the open time of the applied concrete, the concrete may be agitated during storage in the hopper. Due to the high thixotropic nature of concrete, especially 3D-printable concrete, continued agitation helps maintain workability by delaying the rise in the yield stress caused by thixotropy. However, methods and devices known in the art in this context lead to mixing different batches of concrete in the hopper. This mixing leads to an undefined open time of the mixture. The mixing may be incomplete, such that the mixture is inhomogeneous and the open time is a function of the exact location within the mixture. While this is usually uncritical for casting processes, as mixing can occur during casting anyway, it is a significant issue for 3D-printing. Based on the insight that the mixing of batches of concrete needs to be avoided to prevent detrimental effects on the open time and consequently the printed structure, the method of feeding concrete according to the invention comprises the following steps:
- loading a first batch of concrete through the hopper inlet into the container;
- loading a second batch of concrete through the hopper inlet into the container, such that the second batch is positioned above the first batch in the container;
- agitating the first batch and the second batch by means of the agitator, wherein the first batch and the second batch remain substantially separate from one another;
- discharging the first batch through the hopper outlet; and
- after discharging the first batch, discharging the second batch through the hopper outlet.

It is crucial that the first batch and the second batch remain substantially separate from each other, i.e. essentially unmixed. Since the batches (i.e., the first batch and the second batch) are loaded in the same container, there is no distance or physical barrier between the batches. The batches therefore come into contact with each other, for example, alongside a separation surface. The separation surface may be a substantially horizontal plane, for example. Fresh concrete exhibits viscous behavior and is a non-Newtonian fluid, which exhibits shear-thinning. Due to its rheological properties, distinct batches remain substantially separate in the container. An agitator and in particular at least one blade may be configured to generate a substantially horizontal movement of concrete in the container. The at least one blade may be configured to rotate around a vertical axis. Preferably, the agitator is configured to avoid an upward vertical transport or flow of concrete in order to avoid mixing of the first and the second batch. If, for example, the at least one blade intersects the separation surface of the first and the second batch during rotation, a minor mixing at the interface may occur. However, the first and the second batch remain substantially separate and substantially unmixed.

Discharging of the first batch may take place during agitating. In particular, discharging may be continuous, for example, to enable a continuous 3D printing process. In addition, the agitation may be continuous.

The production of batches of concrete is a batch process. The agitated hopper may be used to fit the batch production of concrete to a continuous (printing) process. After the first batch has been discharged, the second batch is discharged. The open time of the first batch and the open time of the second batch remain well-defined even after agitating and discharging. The open time of the first batch and/or the second batch may be between 15 min to 55 min, in particular between 25 min to 45 min, for example.

For example, another batch of concrete may be loaded in the container once the first batch is discharged, in order to provide a continuous discharging of concrete. In this case, the second batch replaces the former first batch and the other batch replaces the former second batch. In such a continuous process in which batches are constantly discharged and reproduced, it is even more crucial to avoid mixing. If batches in the container would be mixed, for example, a residual fraction of an initial (first) batch would remain in the container mixed with subsequent batches. This residual could harden in the container or, for example, a subsequent concrete pump. This could cause a clogging of the system or may compromise an overall construction process. In typical concrete casting processes, the open time of concrete is usually exceeding the period of the production and casting process by far. Therefore, mixing of individual batches in a hopper may not have been an evident and crucial issue in casting processes - although also casting processes could benefit from an enhanced control of the open time. The method of feeding concrete according to the invention ensures that each batch of concrete is essentially completely discharged from the agitated concrete hopper before one or more further batches are discharged. In this way, malfunction of the agitated concrete hopper or any device downstream of the agitated concrete hopper due to an unwanted hardening of concrete can be avoided.

Agitating may be effected by agitating at least a fraction of the first batch and at least a fraction of the second batch simultaneously. The agitator does not necessarily need to agitate the entire first batch and the entire second batch simultaneously. For example, a fraction of the first batch may already be discharged at a certain point in time. The container may comprise a bottom section, which may not be affected by the agitator. A small fraction of the first batch may be in the bottom section before being discharged. Agitating may be effected by rotating the agitator as long as concrete produced in two separate batch processes is in the container.

Optionally, the method may comprise the further step:
- loading a third batch of concrete through the hopper inlet into the container, such that the third batch is positioned above the second batch in the container;
- agitating the second batch and the third batch, wherein the second batch and the third batch remain substantially separate from one another; and
- after discharging the second batch, discharging the third batch through the hopper outlet.

For example, at least three batches (i.e., the first, the second and the third batch) may be in the container at the same time. Regardless of the number of batches in the container, it is crucial that batches in the container remain substantially unmixed to avoid undefined open times of the concrete in the overall process. Especially, the third batch remains separate from the first batch.

Optionally, the method comprises the further step:
- pushing the first batch and/or the second batch and/or the third batch to the hopper outlet by means of the agitator.

Concrete in the container flows towards the bottom of the container due to gravity. The hopper outlet is preferably arranged at the bottom end of the container. The hopper outlet may be open, i.e. unobstructed, such that concrete can be discharged in a continuous way. In order to facilitate the discharging, the first batch and/or the second batch and/or the third batch may be pushed to the hopper outlet by means of the agitator. For example, the at least one blade of the agitator may comprise an angle of attack with respect to a horizontal plan that leads to a downward force on the concrete upon rotating the agitator. Since the hopper outlet is open, such a downward force accelerates the flow towards the hopper outlet without mixing the batches.

Optionally, the method comprises the further step:
- scraping an inner surface of the container by means of the agitator.

The container may be funnel shaped, for example. The inner surface may be an inner surface of the funnel. The inner surface may be conical. For example, the agitator may comprise a scraper, preferably attached to the shaft. The scraper may be configured for scraping the inner surface of the container. Concrete in the container in the vicinity is close to a wall of the container (and therefore close to the inner surface) may stick to the inner surface and harden. This may lead to an unwanted behaviour, for example to clogging of the agitated concrete hopper. By scraping the inner surface of the container, also concrete close to a wall of the container can be agitated. The inner surface may comprise a ceramic lining that furthermore helps to avoid sticking of concrete to the inner surface.

In addition, the method may comprise the further step:
- vibrating the first batch and/or the second batch and/or the third batch, preferably by means of a vibrator.

The vibrator is amechanical device configured to generate vibrations. Such vibrations help facilitate a smooth flow of concrete towards the hopper outlet. Due to the viscous properties of concrete, blockages or air pockets can occur, especially near the outlet of the hopper. A vibrator ensures that the concrete flows efficiently, preventing clogs and air pockets and ensuring uniform discharge - without leading to a mixing of batches. The vibrator may be attached to the container, for example. The vibrator may be attached to a flange connected to the hopper outlet. The vibrator may be attached to a concrete pump arranged after the agitated concrete hopper.

The method may furthermore comprise the further steps:
- producing the first batch of concrete, preferably by means of a concrete mixer, before loading the first batch into the container; and
- producing the second batch of concrete, preferably by means of a concrete mixer, after loading the first batch and before loading the second batch into the container.

The concrete mixer is configured for mixing at least water, a binder, aggregates, and additives, to produce a batch of concrete. The concrete mixer comprises a mixer outlet configured for discharging concrete after mixing. Preferably, the mixer outlet is arranged above the hopper inlet, such that a batch of concrete produced by the mixer is discharged from the mixer outlet and loaded into the container. The second batch is produced after the second batch. The binder may comprise cement, metakaolin and/or limestone, for example.

The concrete mixer may comprise a mixing container for receiving at least water, binder, aggregates, and additives. The concrete mixer may comprise a plurality of blades for configured for mixing.

Preferably, the method comprises the following step:
- producing the third batch, preferably while discharging the first batch and/or while discharging the second batch.

The production of the third batch of concrete may take place while the first batch and/or the second batch is discharged. The production of the third batch may be done in essentially the same time in which the first batch of concrete is (fully) discharged from the container, to achieve a continuous process. The production may take place simultaneous to agitating, optionally pushing, and/or discharging concrete.

The invention furthermore concerns a method for concrete 3D-printing with a method of feeding batches of concrete, wherein the first batch and the second batch are discharged into a pump inlet of a concrete pump, with the further steps:
- conveying the discharged first batch by means of the concrete pump to a printing nozzle; and
- extruding the first batch through the printing nozzle;
- conveying the discharged second batch by means of the concrete pump, to the printing nozzle; and
- extruding the second batch through the printing nozzle.

The steps of the method of feeding batches of concrete according to the invention assure a continuous feed of concrete to the concrete pump and therefore to the printing nozzle and that the individual batches of concrete stay substantially separate or unmixed. The open time of the individual batches of concrete is therefore well defined.

The concrete pump may be connected to the printing nozzle by means of a hose. The batches of concrete may be conveyed through the hose to the printing nozzle. A length of the hose may range, for example, from 1 meter to 50 meters, in particular from 6 meters to 50 meters. The length may be configured depending on the application and a distance between the concrete pump and the printing nozzle. A diameter of the hose may be in a range of 350 mm to 650 mm, for example.

When the first batch is being extruded at the printing nozzle, the second batch may be partially in the hose and/or the concrete pump, while the third batch may be in the agitated concrete hopper, and another batch may be produced. The open time of the concrete (i.e., the batches of concrete may be adjusted according to the expected time in between the production of a batch and its extrusion through the printing nozzle. This time may depend on the length and diameter of the hose and a volume flow provided by the concrete pump, for example.

The printing nozzle may be arranged in or at a printing head. The printing nozzle and/or the printing head may be attached to a robot arm, for example. The printing nozzle may be moved during extruding concrete such that a predefined structure is created. Extruding may also be referred to as "placing" or "dispensing". The structure may be printed in consecutive layers. Further additives may be added in the printing head. Preferably, no further additives are added to concrete in the printing head, such that the concrete 3D-printing process is a 1K process.

After the second batch has been extruded, a third batch may be extruded. Any number of (further) batches may be produced, loaded into the container, agitated, discharged and fed to the pump, conveyed by the pump to the printing nozzle, and extruded by the printing nozzle accordingly. The printing process may be essentially continuous. A speed of the printing process (e.g. in terms of extruded volume per minute) may be adjustable and/or variable.

The invention also concerns an agitated concrete hopper for feeding batches of concrete, preferably to a concrete pump, comprising:
- a container for storing a first batch and/or a second batch of concrete with
   - a hopper inlet at a top end for receiving concrete;
   - a hopper outlet at a bottom end for discharging concrete; and
- an agitator for agitating a first batch and/or a second batch of concrete inside the container, wherein the agitator is configured for avoiding mixing of the first batch and the second batch.

Furthermore, the invention concerns a system for providing concrete, preferably to a concrete pump, comprising:
- a concrete mixer configured for mixing at least water, binder, aggregates, and additives, to produce a batch of concrete, wherein the concrete mixer comprises a mixer outlet configured for discharging concrete after mixing;
- an agitated concrete hopper according to the invention, wherein hopper inlet is configured for receiving batches of concrete from the mixer outlet.

In addition, the invention concerns a concrete batching plant for providing concrete, comprising at least:
- a system for providing concrete according to the invention;
- a water storage unit configured for storing water and for providing water to the concrete mixer;
- a binder storage unit configured for storing cement and for providing binder to the concrete mixer; and
- an aggregate storage unit configured for storing aggregates and for providing aggregates to the concrete mixer

- an additive storage unit configured for storing additives such as a powder and/or a liquid and/or fibers and for providing additives to the concrete mixer.

The water storage unit may comprise a water container and, for example, a hose for providing the water from the water storage unit to the mixer.

The binder storage unit is configured for storing binder and for providing binder to the concrete mixer. The binder may be Portland cement, for example.

The aggregate storage unit is configured for storing aggregates and for providing aggregates to the concrete mixer. The aggregates may comprise sand and/or gravel, for example.

The aggregate storage unit may be configured to store fine aggregates, such as sand, and/or coarse aggregates, such as gravel, separately. The aggregate storage unit may comprise aggregate containers for various types of aggregates with different grain sizes.

The additive storage unit is configured for storing one or more materials, such as supplementary cementitious materials and/or admixtures such as plasticizers, accelerators, retarders, viscosity modifying agents, shrinkage reducing admixtures and air entraining agents and/or fibers, for example steel fibers and/or pigments in powder or liquid form, and/or slurries for examples silica fume slurry.

For example, the concrete batching plant may comprise at least one conveyor belt for transporting binder and/or aggregates and/or additives from the respective storage unit to the concrete mixer. Alternatively or additionally, at least one tube or at least one suction device may be used for transporting.

The concrete batching plant may comprise a transport container, in particular an ISO container, wherein the system for providing concrete and/or the water storage unit and/or the binder storage unit and/or the aggregate storage unit and/or the additives storage unit are arranged in the transport container. The concrete batching plant may comprise two or more transport containers. The concrete batching plant may be mobile, i.e. the transport container(s) together with the system for providing concrete, the water storage unit, the binder storage unit, the aggregate storage unit, and the additives storage unit may be transported by means of a truck, a train or plane, for example. The concrete batching plant may be deployed at a construction site (on-site) in order to provide (freshly produced) concrete directly where it is needed. The individual components (raw materials) of the concrete may be provided locally, e.g. the gravel may be sourced nearby the construction site. This leads to a reduction of transportation and, hence, a reduction of the CO₂ footprint of a construction project.

Concrete mixtures with a large variance in aggregate sizes (e.g. up to 11,2 mm or 16 mm) cannot be premixed and transported as pre-mixes (e.g. in big bags or silos) because the aggregates would segregate over time. Providing concrete with such a variance in aggregate size therefore requires dosing and mixing by using mobile concrete batching plant at the construction site.

A standard (stationary) batching plant for ready-mixed or premixed concrete usually does not have a hopper and pump and cannot be connected upstream of a pump directly at a construction site.

The invention furthermore concerns a system for providing and pumping concrete comprising:
- a system for providing concrete according to the invention or a concrete batching plant according to the invention; and
- a concrete pump, preferably configured for providing a continuous concrete flow with a pump inlet configured for receiving concrete from the hopper outlet, wherein the hopper outlet is connected to the pump inlet.

The concrete pump may optionally be a screw pump, for example. The concrete pump is preferably configured for providing a continuous flow of concrete, preferably without pulsation.

In addition, the invention concerns a concrete 3D-printing system comprising:
- a system for providing and pumping concrete according to the invention; and
- a printing nozzle configured for extruding concrete;
wherein the concrete pump is configured for continuously pumping concrete to the printing nozzle.

In connection with the mobile concrete batching plant, a (physical) distance and/or a time delay between the production of the batches of concrete and the application/extrusion by the printing nozzle can precisely be calculated and the concrete can be precisely adjusted accordingly, e.g. by adjusting the open time accordingly.

Another benefit of the mobility is the advantage of 3D printing technology - material and structure-optimized components with the corresponding and/or required complexity can be produced directly on site (without further transport). The system can be placed quickly and easily and removed just as quickly, especially in an urban environment, for example. The mobility guarantees an optimized and self-contained system.

By way of example, the disclosure is further explained with respect to some selected embodiments shown in the drawings for the purpose of illustration. However, these illustrations shall not be considered as limiting for the disclosure.
Fig. 1A schematically shows an agitated concrete hopper with a container
Fig. 1B schematically shows a sectional view of an agitated concrete hopper with a container and an agitator;
Fig. 1C schematically shows a perspective view of the container shown in fig. 1B
Fig. 1D schematically shows a perspective view of the agitator shown in fig. 1A
Fig. 2 schematically shows another exemplary embodiment of an agitator
Fig. 3 schematically shows a container of an agitated concrete hopper with a first batch and a second batch of concrete Fig. 4 schematically shows a sequence diagram of the method
Fig. 5 schematically shows concrete 3D-printing system
Fig. 6 schematically shows a sequence diagram of a method for concrete 3D-printing

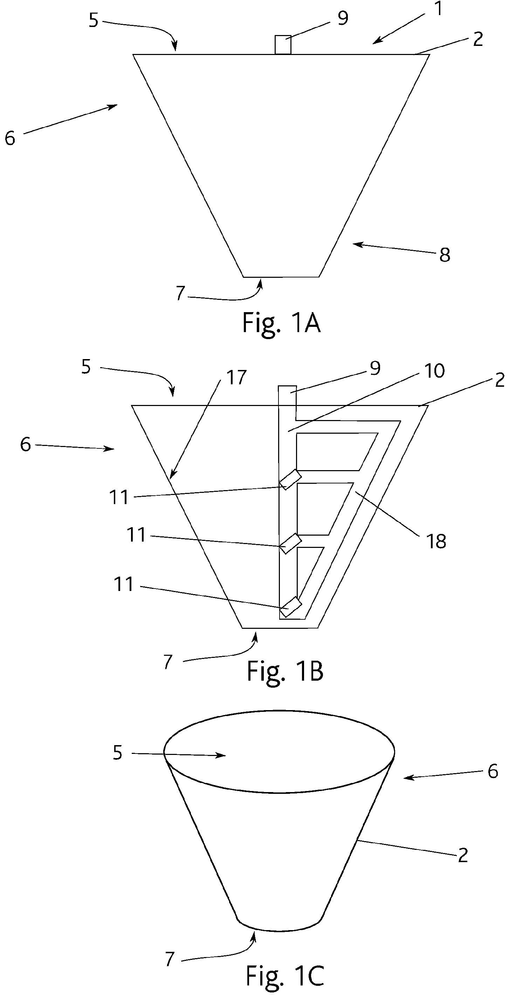

Figures 1A (front view) and 1B (sectional view) schematically show an agitated concrete hopper 1 for feeding batches of concrete comprising:
- a container 2 for storing a first batch 3 and/or a second batch 4 of concrete with
   - a hopper inlet 5 at a top end 6 for receiving concrete;
   - a hopper outlet 7 at a bottom end 8 for discharging concrete; and
- an agitator 9 for agitating a first batch 3 and/or a second batch 4 of concrete inside the container 2, wherein the agitator is configured for avoiding mixing of the first batch 3 and the second batch 4.

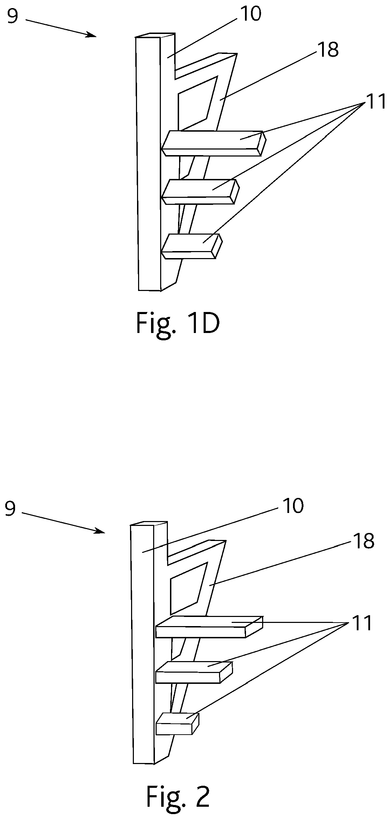

The agitator 9, which is shown in fig. 1D in more detail, is arranged in the container 2 and comprises a shaft 10. The shaft 10 is configured for connecting to a motor. The agitator 9 comprises at least one blade 11, in this case three blades 11, for agitating concrete in the container 2 when the agitator 9 is rotated. The agitated concrete hopper 1 is configured for rotating the agitator 9 counter-clockwise in this example. The blades 11 comprise an angle of attack with respect to a horizontal plane. Due to the angle of attack and the counter-clockwise rotation of the agitator 9, the blades not only agitate concrete in the container 2 but also push concrete in the container 2 downwards towards the hopper outlet 7. In this example, gravity is assumed to point from the hopper inlet 5 towards the hopper outlet 7, i.e. downwards.

Figure 1C shows a perspective view of the container 2 of figures 1A and 1B. In this exemplary embodiment, the container 2 is funnel-shaped (or cone-shaped) and tapers from the top end 6 towards the bottom end 8. The container 2 comprises an inner surface 17. The inner surface 17 is conical. The agitator 9 comprises a scraper 18 attached to the shaft 10.

The scraper 18 is configured for scraping the inner surface 17 of the container 2.

Figure 2 shows another exemplary embodiment of an agitator 9.

Compared to the agitator 9 shown in figure 1B, the blades 11 do not comprise an angle of attack with respect to a horizontal plane. The blades 11 therefore do not push concrete in the container 2 towards the hopper outlet 7.

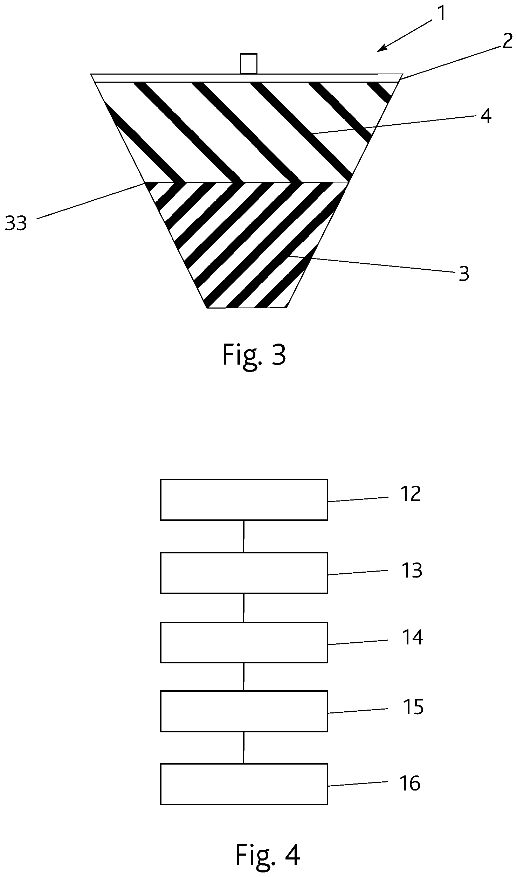

Figure 3 shows the container 2 of fig. 1B with the first batch of concrete 3 and the second batch 4 of concrete. The first batch 3 and the second batch 4 are in physical contact with each other alongside a separation surface 33. The separation surface 33 is a horizontal plane in this example. The separation along the horizontal plane is a consequence of gravity. After loading the first batch 3 into the container 2, the first batch 3 settles in the container. The second batch 4 is then added on top of the first batch 3.

Figure 4 shows a sequence diagram a method of feeding batches of concrete with an agitated concrete hopper 1 (see figures 1A and 1B) comprising a container 2 with a hopper inlet 5 and a hopper outlet 7 and an agitator 9 arranged in the container 2, with the steps:
- loading 12 a first batch 3 of concrete through the hopper inlet 5 into the container 2;
- loading 13 a second batch 4 of concrete through the hopper inlet 5 into the container 2, such that the second batch 4 is positioned above the first batch 3 in the container 2;
- agitating 14 the first batch 3 and the second batch 4 by means of the agitator 9, wherein the first batch 3 and the second batch 4 remain substantially separate from one another;
- discharging 15 the first batch 3 through the hopper outlet 7; and
- after discharging the first batch 3, discharging 16 the second batch 4 through the hopper outlet 7.

The steps agitating 14 and/or discharging the first batch of concrete may be done in parallel to loading 13 the second batch 4 of concrete into the container 2. It is crucial that the first batch 3 and the second batch 4 remain substantially unmixed and are discharged essentially separately, i.e. after one another.

In this exemplary embodiment, the method comprises the further step:
- pushing the first batch 3 and/or the second batch 4 to the hopper outlet 7 by means of the agitator 9. Pushing can be effected by the agitator due to the angle of attack of the blades 11, as shown in fig. 1C, and (in this example) counter-clockwise rotation of the agitator 9. Therefore, pushing is done parallel to agitating 14, since the rotation of the agitator 9 both leads to an agitation of concrete in the container 2 and a downward force on the concrete, i.e. a push.

In this exemplary embodiment, the method comprises the further step:
- scraping the inner surface 17 (see fig. 1B) of the container 2 by means of the agitator 9.

In this exemplary embodiment, the agitated concrete hopper 1 according to the embodiment of figures 1A and 1B is used. Scraping is therefore effected by the scraper 18. Therefore, scraping is also done parallel to agitating 14, since the rotation of the agitator 9 both leads to an agitation of concrete in the container 2 and to scraping the inner surface 17.

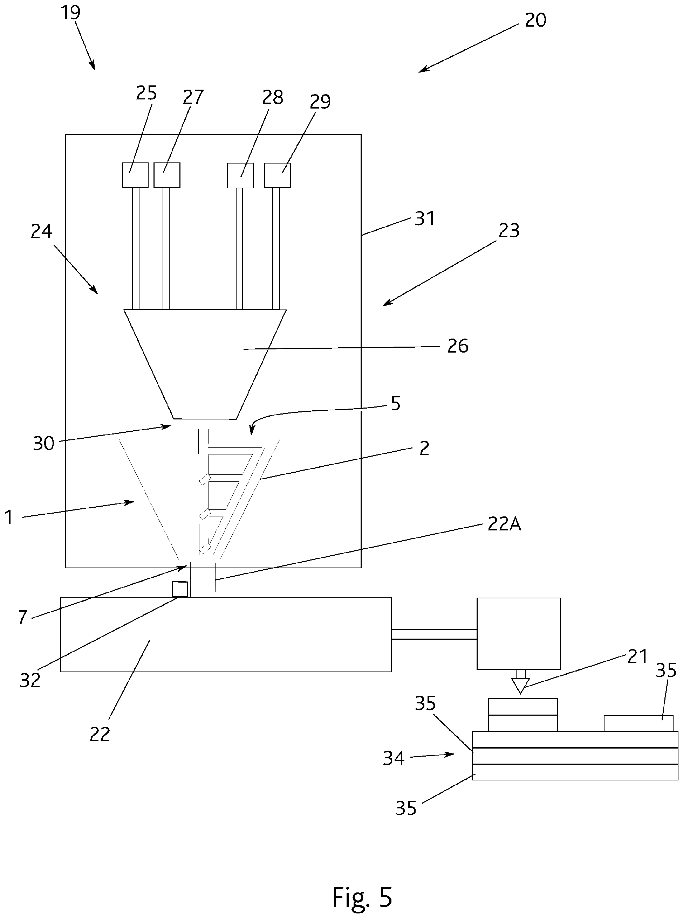

Figure 5 schematically shows a concrete 3D-printing system 19 comprising:
- a system for providing and pumping concrete 20; and
- a printing nozzle 21 configured for extruding concrete; wherein a concrete pump 22 is configured for continuously pumping concrete to the printing nozzle 21.

The system for providing and pumping concrete 20 comprises:
- a concrete batching plant 23; and
- the concrete pump 22, in this example a screw pump, configured for providing a continuous concrete flow, with a pump inlet 22A configured for receiving concrete from the hopper outlet 7, wherein the hopper outlet 7 is connected to the pump inlet 22A.

The concrete batching plant 23 for providing concrete, comprises:
- a system 24 for providing concrete;
- a water storage unit 25 configured for storing water and for providing water to a concrete mixer 26;
- a binder storage unit 27 configured for storing binder (in this exemplary embodiment cement) and for providing binder to the concrete mixer 26;
- an aggregate storage units 28 configured for storing aggregates and for providing aggregates to the concrete mixer 26; and

- an additives storage unit 29 configured for storing additives such as a powder and/or a liquid and/or fibers and for providing additives to the concrete mixer 26.

The system 24 for providing concrete comprises
- the concrete mixer 26 configured for mixing at least water, binder, aggregates, and additives, to produce a batch of concrete, wherein the concrete mixer 26 comprises a mixer outlet 30 configured for discharging concrete after mixing;
- the agitated concrete hopper 1, wherein hopper inlet 5 is configured for receiving batches of concrete from the mixer outlet 30.

The concrete batching plant 23 comprises a transport container 31, wherein the system 24 for providing concrete, the water storage unit 25, the binder storage unit 27, the aggregate storage unit 28 and the additives storage unit 29 are arranged in the transport container 31. Alternatively, the concrete batching plant 23 may comprise a second transport container. For example, a fiber dosage unit (which is an example of an additive storage unit 29) may be provided in the second transport container.

In the context of the embodiment of figure 5, the method according to the invention comprises the further steps:
- producing the first batch 3 of concrete, in this case by means of the concrete mixer 26, before loading the first batch 3 into the container; and
- producing the second batch 4 of concrete, in this example also by means of the concrete mixer 26, after loading the first batch 3 and before loading the second batch 4 into the container 2.

The first batch 3 and the second batch 4 are discharged into the pump inlet 22A of the concrete pump 22. The method comprises the further steps:
- conveying the discharged first batch 3 by means of the concrete pump 22 to the printing nozzle 21; and
- extruding the first batch 3 through the printing nozzle 21;
- conveying the discharged second batch 4 by means of the concrete pump 22, to the printing nozzle 21; and
- extruding the second batch 4 through the printing nozzle 21.

Additionally, the method comprises the further step:
- vibrating the first batch 3 and/or the second batch 4 and/or a third batch, in this example by means of a vibrator 32.

In this exemplary embodiment, the vibrator 32 is provided at the concrete pump 22.

The concrete 3D-printing system 19 3D-prints a concrete structure 34 with individual layers 35. No additives are added at the printing nozzle. Additives are already added during the initial production of the concrete in the concrete mixer 26. Therefore, the process is a 1K process, which leads to an enhance interlayer bonding between consecutive layers 35 of concrete. Since the individual batches of concrete are extruded separately, the open time of each batch is well defined, which enables a controlled printing process and an enhanced integrity of the concrete structure 34.

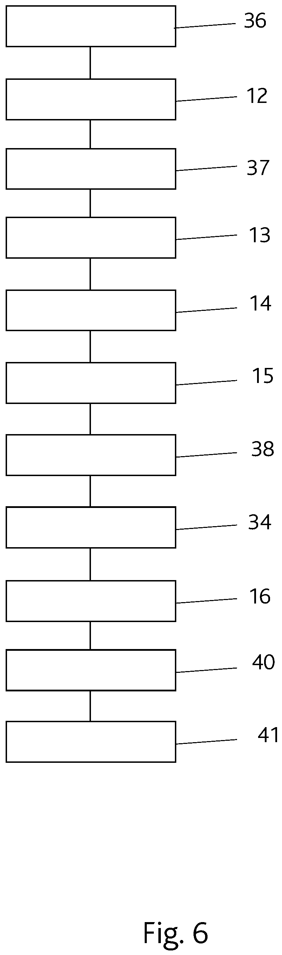

Fig. 6 schematically shows a sequence diagram of an overall method for concrete 3D-printing with the concrete 3D-printing system shown in fig. 5.

The method for concrete 3D-printing comprises the steps:
- producing 36 the first batch 3 of concrete, in this example by means of the concrete mixer 26, before loading the first batch into the container 2;
- loading 12 the first batch 3 of concrete through the hopper inlet 5 into the container 2;
- producing 37 the second batch 4 of concrete, in this case by means of a concrete mixer 26, after loading the first batch 3 and before loading the second batch 4 into the container 2;
- loading 13 the second batch 4 of concrete through the hopper inlet 5 into the container 2, such that the second batch 4 is positioned above the first batch 3 in the container 2;
- agitating 14 the first batch 3 and the second batch 4 by means of the agitator 9, wherein the first batch 3 and the second batch 4 remain substantially separate from one another;
- discharging 15 the first batch 3 through the hopper outlet 7, wherein the first batch 3 is discharged into the pump inlet 22A of the concrete pump 22;
- conveying 38 the discharged first batch 3 by means of the concrete pump 22 to a printing nozzle 21;
- extruding 39 the first batch 3) through the printing nozzle 21;
- after discharging 15 the first batch 3, discharging 16 the second batch 4 through the hopper outlet 7, wherein the second batch 4 is discharged into the pump inlet 22A of the concrete pump 22;
- conveying 40 the discharged second batch 4 by means of the concrete pump 22, to the printing nozzle 21; and
- extruding 41 the second batch 4 through the printing nozzle 21.

The method furthermore comprises the following step:
- producing a third batch while discharging the first batch 3 and/or while discharging the second batch 4.

Any number of further batches may be produced and finally extruded to enable a continuous printing process.

The steps producing and/or agitating and/or discharging and/or conveying and/or extruding may be done in parallel. The most crucial point is that individual batches of concrete are not (substantially) mixed in during agitation in the agitated concrete hopper, such that the individual batches can be extruded separately. This way, the open time of the printed concrete is well-defined and an unwanted stiffening due to thixotropy in the agitated concrete hopper 1, the concrete pump 22, or the printing nozzle 21 (or a hose in between, for example) is minimized.

## Claims

1. Method of feeding batches of concrete, preferably to a concrete pump (22), with an agitated concrete hopper (1) comprising a container (2) with a hopper inlet (5) and a hopper outlet (7) and an agitator (9) arranged at least partially in the container (2), with the steps:
- loading (12) a first batch (3)of concrete through the hopper inlet (5) into the container (2);
- loading (13) a second batch (4) of concrete through the hopper inlet (5) into the container (2), such that the second batch (4) is positioned above the first batch (3)in the container (2);
- agitating (14) the first batch (3) and the second batch (4)by means of the agitator (9), wherein the first batch (3)and the second batch (4) remain substantially separate from one another;
- discharging (15) the first batch (3) through the hopper outlet (7); and
- after discharging (15) the first batch (3), discharging (16) the second batch (4) through the hopper outlet (7).

2. Method according to claim 1, **characterized by** the further step:
- loading a third batch of concrete through the hopper inlet (5) into the container (2), such that the third batch is positioned above the second batch (4) in the container (2);
- agitating the second batch (4) and the third batch, wherein the second batch (4) and the third batch remain substantially separate from one another; and
- after discharging the second batch (4), discharging the third batch through the hopper outlet (7).

3. Method according to claim 1 or claim 2, **characterized by** the further step:
- pushing the first batch (3) and/or the second batch (4) and/or the third batch to the hopper outlet (7) by means of the agitator (9).

4. Method according to anyone of claims 1 to 3, **characterized by** the further step:
- scraping an inner surface of the container (2) by means of the agitator (9).

5. Method according to anyone of claims 1 to 4, **characterized by** the further step:
- vibrating the first batch (3) and/or the second batch (4) and/or the third batch, preferably by means of a vibrator (32).

6. Method according to anyone of claims 1 to 5 **characterized by** the further steps:
- producing the first batch (3) of concrete, preferably by means of a concrete mixer (26), before loading the first batch into the container (2); and
- producing the second batch (4)of concrete, preferably by means of a concrete mixer (26), after loading the first batch (3) and before loading the second batch (4) into the container (2).

7. Method according to claims 2 and 6, **characterized by** the following step:
- producing the third batch, preferably while discharging the first batch (3) and/or while discharging the second batch (4).

8. Method for concrete 3D-printing with a method according to anyone of claims 1 to 7, wherein the first batch (3) and the second batch (4) are discharged into a pump inlet (22A) of a concrete pump (22), **characterized by** the further steps:
- conveying the discharged first batch (3) by means of the concrete pump (22) to a printing nozzle (21); and
- extruding the first batch (3) through the printing nozzle (21);
- conveying the discharged second batch (4) by means of the concrete pump (22), to the printing nozzle (21); and
- extruding the second batch (4) through the printing nozzle (21).

9. Agitated concrete hopper (1) for feeding batches of concrete, preferably to a concrete pump (22), comprising:
- a container (2) for storing a first batch (3) and/or a second batch (4) of concrete with
- a hopper inlet (5) at a top end (6) for receiving concrete;
- a hopper outlet (7) at a bottom end (8) for discharging concrete; and
- an agitator (9) for agitating a first batch (3) and/or a second batch (4) of concrete inside the container (2), wherein the agitator (9) is configured for avoiding mixing of the first batch (3) and the second batch (4).

10. System (24) for providing concrete, preferably to a concrete pump (22), comprising:
- a concrete mixer (26) configured for mixing at least water, binder, aggregates, and additives, to produce a batch of concrete, wherein the concrete mixer (24) comprises a mixer outlet (30) configured for discharging concrete after mixing;
- an agitated concrete hopper (1) according to claim 9, wherein hopper inlet (5) is configured for receiving batches of concrete from the mixer outlet (30).

11. Concrete batching plant (23) for providing concrete, comprising at least:
- a system (24) for providing concrete according to claim 10;
- a water storage unit (25) configured for storing water and for providing water to the concrete mixer;
- a binder storage unit (27) configured for storing binder and for providing binder to the concrete mixer;
- an aggregate storage unit (28) configured for storing aggregates and for providing aggregates to the concrete mixer; and
- an additives storage unit (29) configured for storing additives such as a powder and/or a liquid and/or fibers and for providing additives to the concrete mixer (26).

12. Concrete batching plant (23) according to claim 11, **characterized by** a transport container (31), in particular an ISO container, wherein the system (24) for providing concrete and/or the water storage unit (25) and/or the binder storage unit (27) and/or the aggregate storage unit (28) and/or the additives storage unit (29) are arranged in the transport container (31).

13. System for providing and pumping concrete (20) comprising:
- a system (24) for providing concrete according to claim 10 or a concrete batching plant (23) according to claim 11 or 12; and
- a concrete pump (26), preferably configured for providing a continuous concrete flow with a pump inlet (22A) configured for receiving concrete from the hopper outlet (7), wherein the hopper outlet (7) is connected to the pump inlet (22A).

14. Concrete 3D-printing system (19) comprising:
- a system for providing and pumping concrete (20) according to claim 13; and
- a printing nozzle (21) configured for extruding concrete;
wherein the concrete pump (26) is configured for continuously pumping concrete to the printing nozzle (21).
